Europäisches Patentamt

European Patent Office

Office européen des brevets

(19)

(11) EP 0 692 896 A1

## (12) DEMANDE DE BREVET EUROPEEN

(43) Date de publication:
17.01.1996 Bulletin 1996/03

(51) Int. Cl.6: H04L 27/38

(21) Numéro de dépôt: 95201767.1

(22) Date de dépôt: 29.06.1995

(84) Etats contractants désignés:
DE FR GB IT

(30) Priorité: 12.07.1994 FR 9408653
12.04.1995 FR 9504399

(71) Demandeurs:
• LABORATOIRES D'ELECTRONIQUE PHILIPS
S.A.S.
F-94450 Limeil-Brévannes (FR)
Etats contractants désignés:
FR

• Philips Electronics N.V.
NL-5621 BA Eindhoven (NL)
Etats contractants désignés:
DE GB IT

(72) Inventeur: Daffara, Flavio
F-75008 Paris (FR)

(74) Mandataire: Landousy, Christian
F-75008 Paris (FR)

(54) Recupération de porteuse pour signaux MAQ

(57) Système de transmission numérique de données comportant un récepteur (2) muni d'un dispositif (30) de récupération de porteuse. Le dispositif comprend un oscillateur local (31) et des moyens (34) pour corriger les écarts de phase apparaissant entre un signal complexe d'entrée et une porteuse locale délivrée par l'oscillateur. Les moyens de correction (34) définissent des zones dans le plan défini par les composantes en phase et en quadrature du signal complexe. Ces zones englobent chacune un état d'une constellation ayant servi à l'émission à coder le signal complexe.

Lorsque le point soumis à décision représentant dans le plan I/Q le signal complexe reçu, est situé dans une des zones, les moyens de correction délivrent un signal de correction proportionnel à l'écart de phase mesuré. Lorsque le point soumis à décision est à l'extérieur des zones, les moyens de correction délivrent un signal de correction qui varie en fonction de l'écart de phase mesuré auquel est appliqué un coefficient de pondération qui dépend de l'éloignement dudit point par rapport à la zone la plus proche. Les moyens de correction peuvent corriger soit la fréquence/la phase de l'oscillateur local, selon un premier mode, soit la phase du signal dans un second mode.

FIG.4

EP 0 692 896 A1

## Description

L'invention concerne un système de transmission numérique comprenant un émetteur et un récepteur, le récepteur comportant:

- des moyens pour convertir un signal reçu, codé d'après des états d'une constellation, en un signal en bande de base comportant deux composantes en quadrature l'une avec l'autre,
- des moyens pour numériser le signal en bande de base,
- des moyens de décision pour estimer l'état de la constellation le plus proche du signal en bande de base numérisé,
- des moyens de synchronisation pour estimer un écart de phase entre l'état estimé et le signal en bande de base, et pour corriger l'écart de phase en formant un signal de correction.

Elle concerne également un récepteur pour démoduler un signal d'entrée modulé par sauts d'amplitude et par sauts de phase mis en oeuvre dans un tel système de transmision numérique.

En particulier, il peut s'agir de systèmes pour lesquels une information, après avoir été transmise par modulation d'une onde électromagnétique est restituée par démodulation cohérente. Ces systèmes trouvent leur application dans les modems de transmission de données, les faisceaux hertziens, les systèmes de communications spatiales ou optiques dans le cas de liaisons hétérodynes.

Pour effectuer la démodulation cohérente, selon une technique connue, la phase de l'onde porteuse est restituée en général à l'aide d'un oscillateur placé dans une boucle de récupération de porteuse. Cet oscillateur est commandé en tension par une version filtrée du signal de sortie d'un détecteur de phase qui détecte l'écart de phase entre l'oscillateur et l'onde porteuse d'émission.

Une autre technique connue consiste à effectuer un traitement entièrement numérique en mettant en oeuvre un oscillateur à fréquence fixe et un estimateur de phase.

Dans les deux cas, pour des modulations numériques à grand nombre d'états, l'écart de phase entre l'oscillateur et l'onde porteuse doit être impérativement limité à des petites valeurs. La bande de bruit de la boucle de récupération est alors réduite à l'aide d'un filtrage passe-bas étroit.

Un dispositif de récupération de porteuse selon la première technique est décrit dans le brevet europeen n° 0118156. En représentant les composantes en phase I et en quadrature Q du signal complexe reçu dans un plan I, Q, ce document enseigne d'effectuer la synchronisation de l'oscillateur local, en appliquant à l'oscillateur local un signal de correction dépendant des zones du plan I, Q par rapport auxquelles le signal complexe d'entrée est situé. Par ailleurs, à l'émission, le signal complexe est issu d'un codage par sauts d'amplitude et par sauts de phase qui, dans le plan I, Q, donne lieu à une représentation par une constellation d'états. Les zones précédentes sont déterminées par rapport aux états de la constellation. Mais ce dispositif de récupération de porteuse n'a pas pour objet de minimiser la gigue de phase à l'état permanent.

La seconde technique citée est connue par exemple du document: "Demodulator Reference Recovery Techniques Suited For Digital Implementation", F.M. GARDNER, European Space Agency, ESTEC Contract n° 6847/86/NL/DG, Chapitre 8, pages 200 à 258, Août 1988.

Ce document décrit un récepteur dans lequel un signal reçu, transformé en fréquence intermédiaire, est converti en un signal en bande de base à l'aide d'un oscillateur opérant à fréquence fixe. Le signal est ensuite numérisé pour être soumis à l'action d'un organe de décision qui estime de quel état de la constellation le signal en bande de base est le plus proche. Pour corriger les écarts de fréquence et les écarts de phase, le signal en bande de base est multiplié par des signaux de correction avant d'effectuer la décision.

Il est connu que dans un dispositif de récupération de porteuse opérant en boucle fermée, la gigue de phase minimale qu'il est possible d'atteindre, dite limite de Cramer-Rao, est donnée par la relation suivante :

$$\sigma^2 = 2\ B_L\ x\ T/SNR$$

où $\sigma^2$ est la variance statique de phase,

$B_L$ est la largeur de bande de boucle monolatérale.

SNR est le rapport signal à bruit.

T est la durée symbole.

Le but de l'invention est de minimiser la gigue de phase et autant que possible de tendre vers cette limite pour assurer une synchronisation avec une gigue de phase la plus faible possible même en présence d'un rapport signal à bruit très faible.

Ce but est atteint avec un système de transmission numérique du genre décrit dans le préambule dans lequel le récepteur comporte des moyens de synchronisation formant le signal de correction en dépendance avec des zones du plan I, Q dans lesquelles est situé le point représentant le signal numérisé en bande de base, les moyens de synchronisation étant tels que, d'une part, dans des premières zones non-jointives contenant individuellement un état de la constellation, le signal de correction est proportionnel à l'écart de phase mesuré entre le signal initial en bande de base et l'état de la constellation le plus proche, et, d'autre part, les moyens de synchronisation étant tels que dans des secondes zones, extérieures aux premières zones, le signal de correction varie d'après ledit écart de phase pondéré par un coefficient de pondération qui dépend du signal soumis à décision appelé ici point soumis à décision, le coefficient de pondération décroissant progressivement lorsque le point soumis à décision passe d'une frontière de la première zone la plus proche dudit point jusqu'à une limite située à égale distance de couples d'états adjacents, la limite étant la limite la plus proche dudit point.

La gigue de phase est ainsi très fortement réduite par rapport aux techniques antérieures.

Selon un premier mode de réalisation de la première technique, préférentiellement, les moyens de correction comprennent une table de lecture qui est adressée par la composante en phase et par la composante en quadrature du signal complexe, la table délivrant le signal de correction adapté à chaque point du plan I, Q. Selon un second mode de réalisation de la première technique, les moyens de correction comprennent un détecteur de phase qui mesure les écarts de phase, des moyens de reconnaissance de zones qui délivrent des coefficients de pondération relatifs aux zones et des moyens pour pondérer par le coefficient de pondération y afférent l'écart de phase mesuré par le détecteur de phase et pour délivrer le signal de correction.

Selon la seconde technique, le signal reçu, transféré en fréquence intermédiaire, est converti en signal en bande de base à l'aide d'un oscillateur opérant à une fréquence fixe. Le signal en bande de base, après numérisation, est ensuite corrigé en fréquence et en phase par des techniques purement numériques. En particulier, les moyens de synchronisation comprennent des moyens numériques de déphasage pour convertir l'écart de phase, pondéré par le coefficient de pondération approprié, en un signal complexe de correction qui est multiplié numériquement avec le signal en bande de base pour le déphaser.

Les moyens de déphasage comportent:

- des moyens pour générer un signal intermédiaire complexe déterminant l'écart de phase,
- des moyens de reconnaissance de zones qui délivrent des coefficients de pondération relatifs aux zones,
- des moyens pour pondérer, par le coefficient de pondération y afférent, le signal intermédiaire complexe déterminant l'écart de phase,
- des moyens pour délivrer le signal complexe de correction à partir du signal intermédiaire complexe pondéré caractérisant l'écart de phase pondéré.

Les moyens de déphasage peuvent comprendre des moyens de calcul pour calculer des valeurs moyennes pondérées du signal intermédiaire complexe adressant les moyens délivrant le signal complexe de correction.

L'invention concerne aussi un récepteur pour un système de transmission numérique, le récepteur comportant:

- des moyens pour convertir un signal reçu, codé d'après des états d'une constellation, en un signal en bande de base comportant deux composantes en quadrature l'une avec l'autre,
- des moyens pour numériser le signal en bande de base,
- des moyens de décision pour estimer l'état de la constellation le plus proche du signal en bande de base numérisé,
- des moyens de synchronisation pour estimer un écart de phase entre l'état estimé et le signal en bande de base, et pour corriger l'écart de phase en formant un signal de correction, caractérisé en ce que, les deux composantes définissant un point représentant le signal reçu dans un plan I, Q dans lequel sont également repérés les états de la constellation, les moyens de synchronisation forment le signal de correction en dépendance avec des zones du plan I, Q dans lesquelles est situé le point représentant le signal numérisé en bande de base, et sont tels que, d'une part, dans des premières zones non-jointives contenant individuellement un état de la constellation, le signal de correction est proportionnel à l'écart de phase mesuré entre le signal initial en bande de base et l'état de la constellation le plus proche, et que, d'autre part, les moyens de synchronisation sont tels que dans des secondes zones, extérieures aux premières zones, le signal de correction varie d'après ledit écart de phase pondéré par un coefficient de pondération qui dépend du signal soumis à décision appelé ici point soumis à décision, le coefficient de pondération décroissant progressivement lorsque le point soumis à décision passe d'une frontière de la première zone la plus proche dudit point jusqu'à une limite située à égale distance de couples d'états adjacents, la limite étant la limite la plus proche dudit point.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent :

Figure 1 : un schéma d'un système de transmission numérique connu comprenant un émetteur de données, le canal de transmission et un récepteur de données (première technique).

Figure 2 : une partie d'une constellation se rapportant à une modulation codée MAQ 16 représentée dans un quart de plan.

Figure 3 : un diagramme montrant les perturbations apportées par le canal de transmission et par l'erreur de phase.

Figure 4 : un diagramme montrant des zones contenant des états de la constellation intervenant dans la génération du signal de correction.

Figure 5 : un schéma d'un récepteur muni d'un dispositif de récupération de porteuse selon l'invention avec un premier mode de réalisation des moyens de correction (première technique).

Figure 6 : un schéma d'un récepteur muni d'un dispositif de récupération de porteuse selon l'invention avec un second mode de réalisation des moyens de correction (première technique).

Figure 7 : un schéma d'un autre exemple de réalisation pour générer les coefficients de pondération dans les moyens de correction.

Figure 8 : des courbes indiquant les performances du dispositif de récupération de porteuse selon l'invention en fonction du coefficient de pondération (première technique).

Figure 9 : un schéma d'un système de transmission numérique connu comprenant un émetteur de données, le canal de transmission et un récepteur de données (seconde technique).

Figure 10 : un diagramme montrant les perturbations apportées par le canal de transmission et par l'erreur de phase.

Figure 11 : un schéma des moyens de synchronisation numérique selon l'invention (seconde technique).

Figure 12 : un schéma des moyens pour numériser le signal en bande de base selon un premier mode de réalisation (seconde technique).

Figure 13 : un schéma des moyens pour numériser le signal en bande de base selon un second mode de réalisation (seconde technique).

Figure 14 : un schéma des moyens pour calculer le signal intermédiaire complexe caractérisant l'écart de phase (seconde technique).

Figure 15 : des courbes indiquant les performances obtenues en fonction du coefficient de délimitation de zones (seconde technique).

## A - TECHNIQUE A RECUPERATION DE PORTEUSE

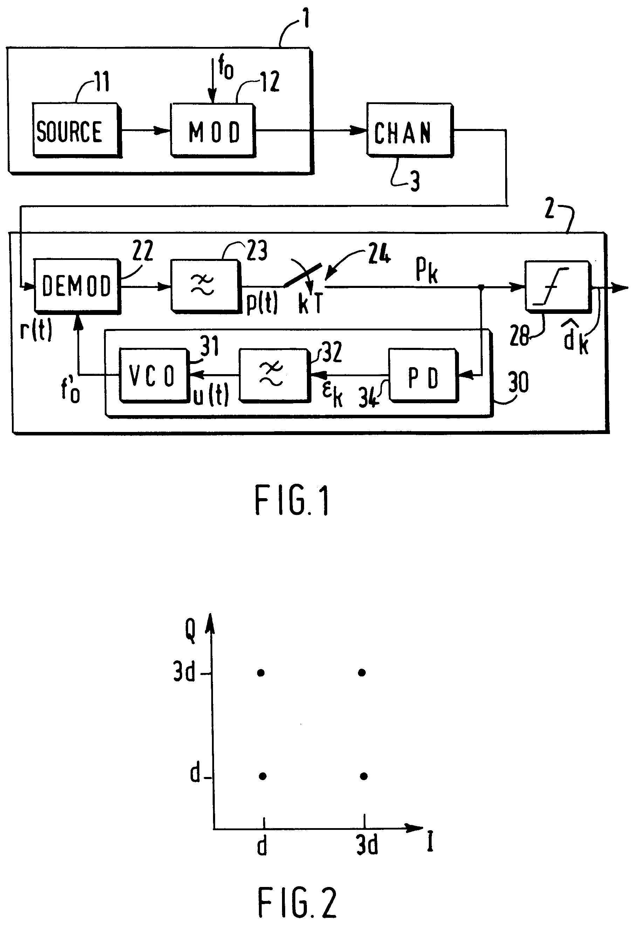

La figure 1 représente un système de transmission numérique comprenant :

- un émetteur 1, muni d'une source 11 de données et de moyens de modulation 12 par une porteuse fo pour émettre les données,
- un canal de transmission 3,
- un récepteur 2 muni d'un démodulateur 22 suivi de moyens de filtrage 23 qui délivrent un signal p(t) en bande de base filtré, des moyens 24 pour échantillonner le signal p(t) filtré et délivrer des échantillons $p_k$,
- un dispositif 30 de récupération de porteuse,
- des moyens de décision 28 pour fournir des échantillons estimés $\hat{d}_k$ des données émises par l'émetteur.

Selon l'art antérieur connu le dispositif 30 de récupération de porteuse comprend un oscillateur local 31 qui délivre une porteuse $f'_o$ asservie à la fréquence de la porteuse de l'émetteur. La porteuse $f'_o$ entre dans le démodulateur 22 pour réaliser la démodulation du signal complexe r(t) reçu qui entre dans le récepteur. Pour corriger l'oscillateur local 31, le dispositif 30 de récupération de porteuse comprend des moyens 34 (par exemple un détecteur de phase) pour déterminer des zones du plan I, Q dans lesquelles se situe le signal en bande de base reçu (échantillons $p_k$), et pour déterminer des valeurs d'un signal de correction $\varepsilon_k$ qui dépend des zones dans lesquelles apparaît le signal complexe. Le signal de correction $\varepsilon_k$ est filtré dans des moyens de filtrage 32 qui délivrent un signal de correction filtré u(t) qui corrige l'oscillateur local 31.

La figure 2 représente un exemple de constellation, représentée dans le plan I, Q des composantes en phase I et en quadrature Q, d'un signal issu d'une modulation par sauts d'amplitude et par sauts de phase. La figure 2 concerne à titre d'exemple une modulation MAQ 16 représentée dans un quart de plan. Il peut s'agir d'une autre modulation. Le quart de constellation est formé de quatre états (d,d), (d,3d), (3d,d), (3d,3d). Les autres états dans les autres quarts de plan se déduisent par symétrie.

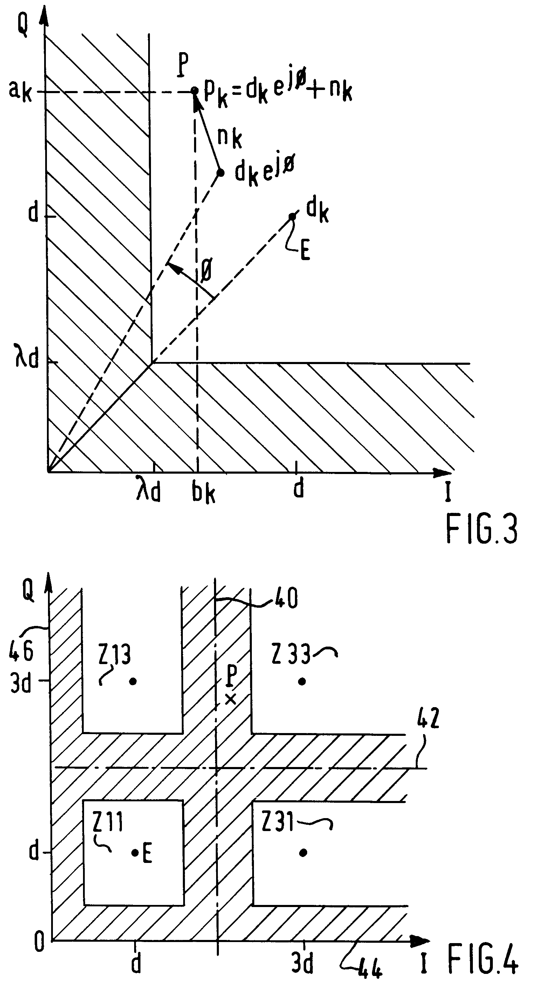

La figure 3 représente un état E de la constellation. Supposons qu'à l'émission, un symbole $d_k$ soit émis correspondant à cet état E. A la réception, ce symbole $d_k$ sera reçu avec un déplacement de phase $\phi$ ce qui transforme le symbole $d_k$ en un symbole $d_k.e^{j\phi}$ qui lui-même peut être entaché d'un bruit $n_k$, qui le transforme en un symbole $p_k = d_k.e^{j\phi} + n_k$ représenté par le point P.

Le récepteur doit donc estimer un symbole $\hat{d}_k$ identique au symbole émis $d_k$ à partir du symbole $p_k$. Ceci est obtenu par une opération de décision.

Pour corriger l'erreur de phase $\phi$, on utilise un détecteur d'erreur de phase qui délivre un signal de correction $\varepsilon_k$ qui corrige l'oscillateur local.

Le signal d'erreur de phase est donné, par exemple, par :

$$(1) \qquad \varepsilon_k = Im\left\{ p_k \times \hat{d}^*_k \right\}$$

où $I_m$ signifie "partie imaginaire de" et où $\hat{d}^*_k$ est le conjugué du symbole estimé $\hat{d}_k$, et X représente une multiplication.

Une manière classique d' évaluer les performances du détecteur de phase consiste à mesurer la variance statique de phase $\sigma^2$, ou gigue de phase, dans la boucle de récupération de phase et à comparer cette gigue de phase avec une valeur limite minimale de gigue de phase, dite limite de Cramer-Rao, qui est telle que :

$$\sigma^2 = 2\, B_L \times T/SNR \qquad\qquad (2)$$

Or, il apparaît expérimentalement qu'un détecteur de phase opérant selon l'équation (1) présente de bonnes performances à conditions que la décision qui génère le symbole estimé $\hat{d}_k$ soit correcte. Dès que cette décision est erronée, le détecteur de phase n'a plus de bonnes performances.

Selon l'invention on tient compte de la probabilité de bonne décision pour pondérer le signal de correction qui agit sur l'oscillateur local. Selon l'invention, (figure 4), on définit pour chaque état une zone, contenant l'état, dans laquelle la décision prise est considérée comme étant une bonne décision. A l'extérieur des zones, les décisions sont considérées comme étant moins bonnes et ceci d'autant plus que le symbole reçu, représenté dans le plan par le point P (point soumis à décision), s'écarte des zones contenant chaque état. Pour mettre ceci en oeuvre, selon l'invention, on définit un coefficient de pondération $\gamma_k$ qui vaut 1 lorsque le point soumis à décision est situé à l'intérieur des zones contenant les états.

Le coefficient de pondération $\gamma_k$ décroît progressivement lorsque le point soumis à décision s'écarte desdites zones. Le symbole échantillonné reçu :

$$p_k = d_k{}^* \, e^{j\phi} + n_k$$

peut être écrit en coordonnées cartésiennes tel que :

$$p_k = a_k + j\, b_k$$

Lorsque le point soumis à décision est situé dans les parties hachurées des figures 3 et 4, c'est-à-dire à l'extérieur des zones contenant les états, le coefficient de pondération est tel que :

$$\gamma_k = z/(\lambda d)$$

où z est égal à la plus petite des valeurs absolues de $a_k$ ou de $b_k$,

soit $z = \min(|a_k|, |b_k|)$ dans le cas d'une QPSK et où $\lambda$ est un coefficient de délimitation de zones.

Sur la figure 4 sont représentées les zones Z11, Z13, Z31, Z33 contenant respectivement les états (d,d) (d,3d) (3d,d) et (3d,3d) d'une modulation MAQ16. Le coefficient de pondération décroît jusqu'à des limites 40, 42, 44, 46 qui sont sensiblement situées à égales distances des états adjacents. Les zones Z13, Z31, Z33 ne sont pas limitées pour les valeurs élevées de $a_k$ et de $b_k$. Elles peuvent avoir des formes différentes de celles représentées sur la figure 4.

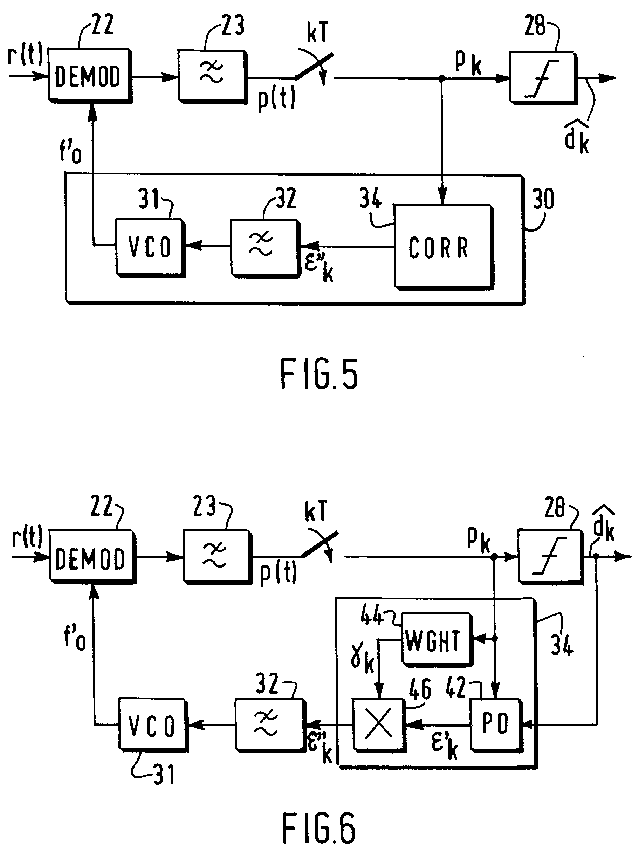

La figure 5 représente un mode de réalisation de l'invention. Les mêmes élements que ceux de la figure 1 sont identifiés avec les mêmes repères. Le dispositif 30 de récupération de porteuse comprend dans ce cas des moyens 34 pour délivrer un signal de correction $\varepsilon''_k$ à partir des composantes $a_k$ et $b_k$ du point soumis à décision en faisant d'une part que le signal de correction $\varepsilon''_k$ soit proportionnel à l'écart de phase mesuré entre le point soumis à décision (point P) et l'état de la constellation la plus proche du point P, lorsque le point soumis à décision est à l'intérieur des zones Z11, Z13, Z31, Z33, et en faisant, d'autre part, que le signal de correction $\varepsilon''_k$ varie d'après ledit écart de phase mesuré auquel est appliqué un coefficient de pondération qui décroît progressivement de un vers sensiblement zéro entre un bord de zone et les limites préalablement définies, lorsque le point soumis à décision est extérieur auxdites zones. Les moyens 34 sont préférentiellement constitués d'une table de lecture stockée par exemple dans une mémoire dans laquelle sont chargées préalablement les valeurs, qui viennent d'être définies, à donner au signal de correction $\varepsilon''_k$. Le signal de correction $\varepsilon''_k$ remplace ainsi le signal de correction $\varepsilon_k$ de la figure 1.

Selon un autre mode de réalisation représenté sur la figure 6, les moyens de correction 34 sont légèrement modifiés pour y inclure un détecteur de phase. Celui-ci mesure l'écart de phase entre le point soumis à décision (point P) et le symbole le plus proche de la constellation (point E) (figure 3) et délivre un signal de correction intermédiaire $\varepsilon'_k$. Les moyens de correction 34 comprennent aussi des moyens WGHT 44 pour définir les zones et déterminer les coefficients

de pondération $\gamma_k$ qu'il faut appliquer compte tenu du signal complexe reçu $p_k = a_k + jb_k$. Des moyens 46 permettent ensuite de pondérer le signal de correction intermédiaire $\varepsilon'_k$ pour fournir le signal de correction $\varepsilon''_k$.

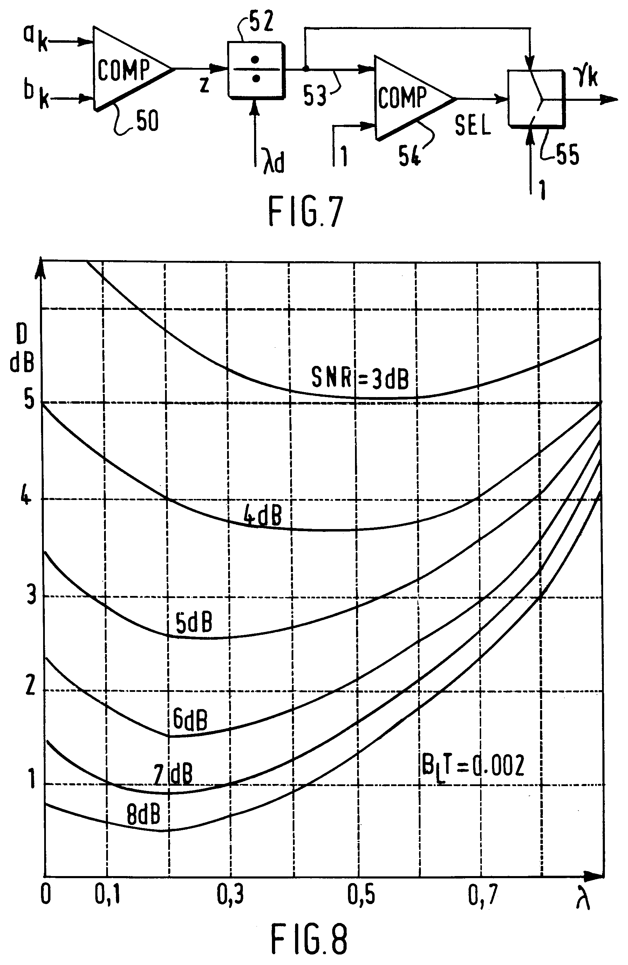

Les moyens 44 pour définir les zones et déterminer les coefficients de pondération $\gamma_k$ sont dans ce cas réalisés préférentiellement sous la forme d'une table de lecture stockée dans des moyens de mémorisation, par exemple une mémoire. Ils peuvent également être réalisés selon le schéma de la figure 7 dans le cas d'une modulation QPSK.

Dans ce cas un dispositif de comparaison 50 compare les valeurs absolues de $a_k$ et de $b_k$ et sélectionne celle qui est la plus petite pour former la donnée z telle que $z = \min(|a_k|, |b_k|)$. Des moyens de division 52 de z par $\lambda d$ délivrent un quotient $z/(\lambda d)$ (connexion 53) qui est comparé à une valeur unité dans un comparateur 54 qui délivre un signal de sélection à un sélecteur 55 qui fournit le coefficient de pondération $\gamma_k$ se rapportant au signal $p_k$ tel que :

$$\gamma_k = 1 \; si \; z \geq \lambda d$$

$$\gamma_k = z/(\lambda d) \; si \; z < \lambda d$$

La figure 8 représente les performances obtenues avec un dispositif de récupération de porteuse selon l'invention dans le cas d'une modulation QPSK. L'axe des abscisses correspond au coefficient de pondération $\lambda$, l'axe des ordonnées correspond à la dégradation D exprimée en décibels (dB) mesurée entre la gigue de phase minimale, dite limite de Cramer-Rao et celle obtenue par l'invention. Les courbes sont paramétrées par des valeurs de rapport signal/bruit SNR exprimées en décibels (dB). Les courbes concernent un exemple pour lequel on a $B_L \; x \; T = 0,002$. Lorsque $\lambda = 0$ on obtient la situation d'un dispositif de récupération de porteuse ne mettant pas en oeuvre l'invention. On observe qu'il existe une valeur optimale du coefficient de pondération $\lambda$ qui permet d'améliorer les performances obtenues vis-à-vis de celles d'un dispositif de récupération de porteuse ne mettant pas en oeuvre l'invention. Cette valeur optimale dépend du rapport signal/bruit SNR. L'amélioration est importante lorsque le rapport signal/bruit est faible. Elle devient plus faible lorsque le rapport signal/bruit est élevée ce qui est dû au fait que les décisions effectuées par les moyens de décision 28 (figures 5 et 6) sont presque toujours correctes.

## B - TECHNIQUE A ESTIMATEUR DE PHASE

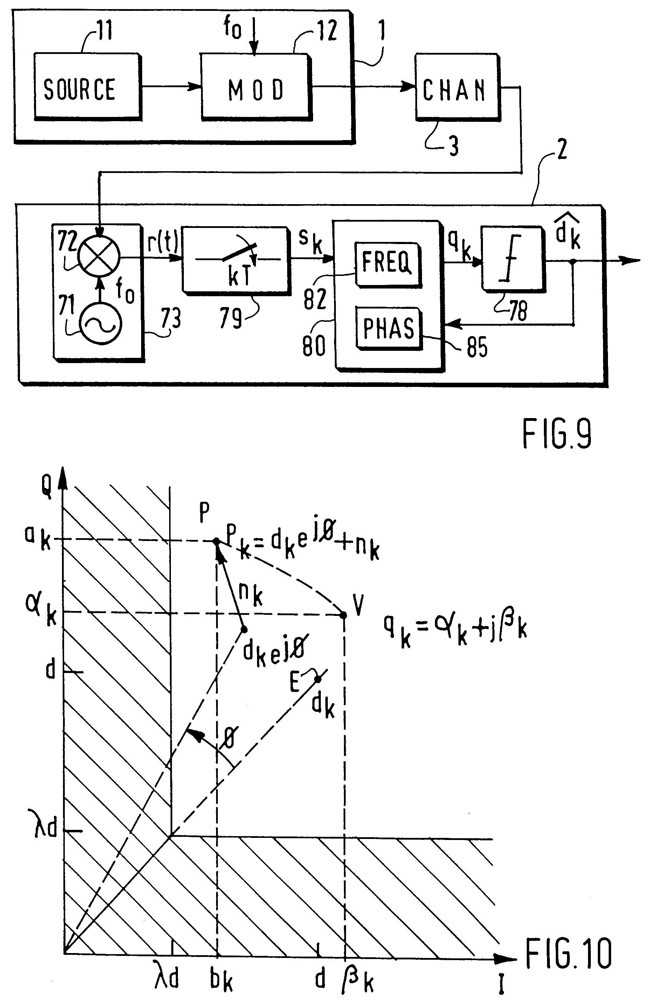

Pour la seconde technique, la figure 9 représente un système de transmission numérique dont seul le récepteur diffère de celui de la première technique. Le récepteur 2 comprend :

- de moyens 73 pour convertir le signal IF reçu en un signal r(t) en bande de base (les moyens pour transformer le signal HF reçu en un signal IF à fréquence intermédiaire ne sont pas représentés),
- de moyens 79 pour numériser le signal en bande de base r(t) et délivrer des échantillons $s_k$,
- de moyens 78 de décision pour estimer l'état de la constellation le plus proche du point soumis à décision (point V) et pour fournir des échantillons estimés $\hat{d}_k$ des données émises par l'émetteur,
- et de moyens 80 de synchronisation pour estimer un écart de phase entre l'état estimé et le signal en bande de base numérisé (point P), et pour corriger numériquement l'écart de phase en formant un signal complexe de correction.

Les moyens de conversion 73 comprennent un oscillateur local 71 opérant à une fréquence fixe $f_0$ et un mélangeur 72 qui mélange le signal IF avec le signal local à fréquence $f_0$.

Les moyens de synchronisation 80 corrigent numériquement d'une part les écarts de fréquence et d'autre part les écarts de phase. Ils comprennent pour cela des moyens 82 de correction de fréquence et des moyens 85 de déphasage. Les écarts de phase sont déterminés en comparant la phase des échantillons estimés $\hat{d}_k$ issus des moyens de décision 78 avec la phase des échantillons issus des moyens 82 de correction de fréquence. Cette comparaison donne lieu à la formation d'un signal complexe de correction $e^{-j\phi}$ qui sert à déphaser les échantillons issus des moyens 82 de correction de fréquence.

Avec l'estimateur de phase selon la seconde technique (figure 10), le symbole représenté par le point P ($p_k = a_k + jb_k$) va être corrigé en phase et être transformé en un symbole représenté par un point V ($q_k = \alpha_k + j\beta_k$).

Le récepteur doit donc estimer un symbole $\hat{d}_k$ identique au symbole émis $d_k$ à partir du symbole $q_k$. Ceci est obtenu par une opération de décision.

Pour corriger l'erreur de phase $\phi$ et délivrer un signal complexe de correction $e^{-j\phi}$, on doit au préalable calculer un signal intermédiaire $u_k$ donné, par exemple, par :

$$(3) \qquad u_k = \frac{\left\{p_k \times \hat{d}_k^*\right\}}{|\hat{d}_k|^2} = \frac{p_k}{\hat{d}_k}$$

où $\hat{d}_k^*$ est le conjugué du symbole estimé $\hat{d}_k$, et X représente une multiplication.

Or, il apparaît expérimentalement qu'un estimateur de phase opérant selon l'équation (3) présente de bonnes performances à conditions que la décision qui génère le symbole estimé $\hat{d}_k$ soit correcte. Dès que cette décision est erronée, l'estimateur de phase n'a plus de bonnes performances.

De la même manière que précédemment, on tient compte de la probabilité de bonne décision pour pondérer le signal de correction.

Ce qui a été développé précédemment pour le point P $(a_k + jb_k)$ s'applique de la même manière au point V $(\alpha_k + j\beta_k)$. Lorsque le point V est situé dans les parties hachurées de la figure 10, c'est-à-dire à l'extérieur des zones contenant les états, le coefficient de pondération est tel que :

$$\gamma_k = z/(\lambda d)$$

où z est égal à la plus petite des valeurs absolues de $\alpha_k$ ou de $\beta_k$,

$$soit\ z = \min\ (|\alpha_k|,|\beta_k|)$$

dans le cas d'une modulation QPSK et où $\lambda$ est un coefficient de délimitation de zones.

Ce qui a été exposé pour la modulation MAQ 16 (figure 4) s'applique également pour la seconde technique.

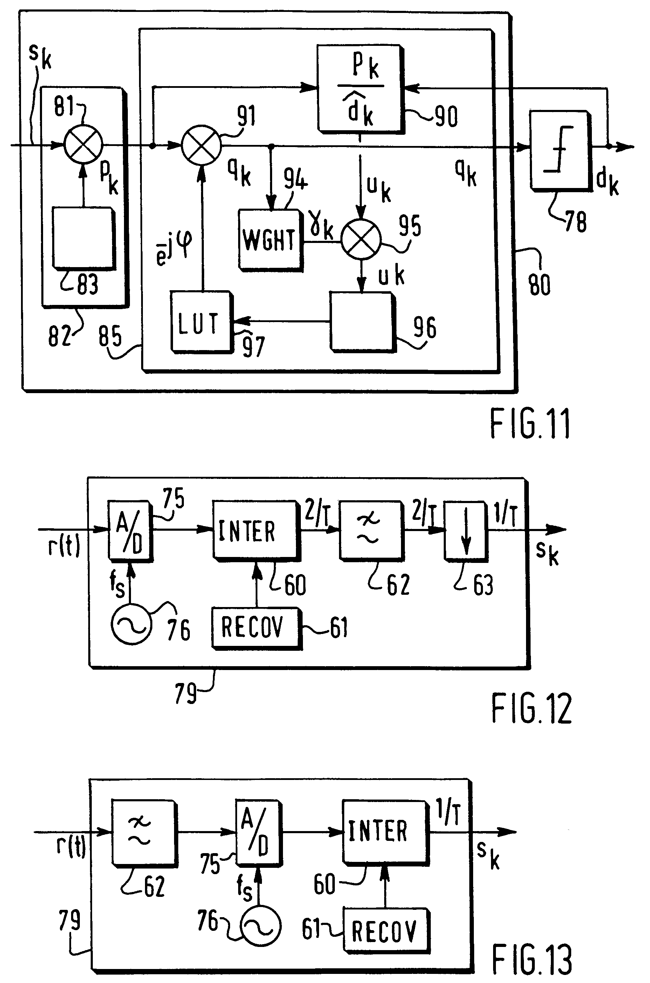

La figure 11 représente un mode de réalisation de la seconde technique. Les mêmes élements que ceux de la figure 9 sont identifiés avec les mêmes repères. Les moyens de déphasage 85 forment le signal de correction $e^{-j\phi}$ à partir des composantes $\alpha_k$ et $\beta_k$ du signal complexe $q_k$ en faisant d'une part que le signal de correction $e^{-j\phi}$ soit proportionnel à l'écart de phase mesuré entre le signal initial en bande de base et l'état de la constellation le plus proche, lorsque le point est à l'intérieur des zones Z11, Z13, Z31, Z33, et en faisant, d'autre part, que le signal de correction $e^{-j\phi}$ varie d'après ledit écart de phase mesuré auquel est appliqué un coefficient de pondération qui dépend du signal soumis à décision (point V), le coefficient de pondération décroissant progressivement de un vers sensiblement zéro entre un bord de zone et les limites préalablement définies, lorsque le point soumis à décision est extérieur auxdites zones. Les moyens de déphasage 85 recoivent les échantillons $p_k$ et délivrent des échantillons $q_k$ corrigés en phase. Ils recoivent aussi les échantillons estimés $\hat{d}_k$ en provenance des moyens 78 de décision.

Les moyens de déphasage interviennent pour compenser l'écart de phase entre le symbole reçu (point P) et l'état le plus proche de la constellation (point E) (figure 10) et pour délivrer le signal complexe de correction $e^{-j\phi}$.

Les échantillons estimés $\hat{d}_k$ entrent dans des moyens 90 de calcul du signal intermédiaire complexe $u_k$. Des moyens de sélection de zones WGHT 94 définissent les zones et déterminent les coefficients de pondération $\gamma_k$ qu'il faut appliquer compte tenu du signal complexe $q_k = \alpha_k + j\beta_k$. Des moyens de multiplication 95 permettent ensuite de pondérer le signal intermédiaire $u_k$ pour fournir le signal intermédiaire pondéré $u'_k$ qui sert à adresser des moyens de transformation 97 qui transforment le signal intermédiaire pondéré $u'_k$ en signal complexe de correction $e^{-j\phi}$. Les moyens 97 sont par exemple constitués d'une table de lecture LUT. Il est possible de remplacer les valeurs $u'_k$ du signal intermédiaire par des valeurs moyennes $\langle u'_k \rangle$ calculées sur une suite de valeurs de composantes du signal en bande de base calculées dans des moyens de calcul 96.

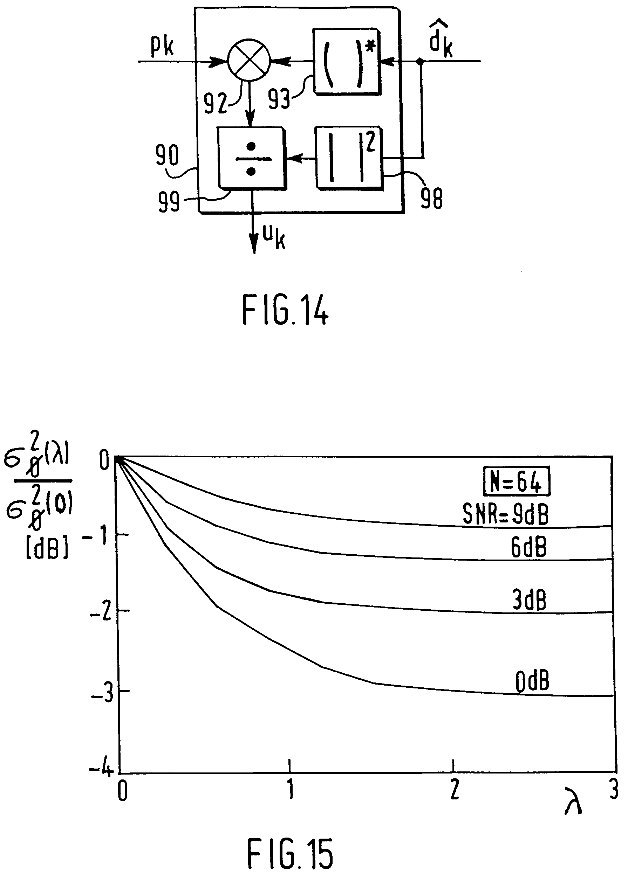

La figure 14 représente un premier mode de réalisation des moyens 90 de calcul du signal intermédiaire $u_k$. Ils comprennent des moyens 93, (par exemple une table de lecture), qui déterminent le conjugué de l'échantillon estimé $\hat{d}_k$. L'échantillon conjugué est multiplié avec l'échantillon $p_k$ dans des moyens de multiplication 92. Par ailleurs, des moyens 98 (par exemple une table de lecture) déterminent le carré de la valeur absolue de l'échantillon estimé $\hat{d}_k$ qui est introduit dans des moyens de division qui divisent les données issues des moyens de multiplication 92 par les données issues des moyens 98 de calcul des carrés de valeurs absolues. Les moyens 99 de division délivrent des échantillons $u_k$ du signal intermédiaire. Selon un second mode de réalisation, les moyens 90 peuvent comporter un diviseur complexe calculant $p_k/\hat{d}_k$.

Les moyens de sélection de zones 94, qui définissent les zones et déterminent les coefficients de pondération $\gamma_k$, sont réalisés préférentiellement sous la forme d'une table de lecture stockée par exemple dans une mémoire. Ils peuvent également être réalisés selon le schéma de la figure 7 dans le cas d'une modulation QPSK. Dans ce cas un dispositif de comparaison 50 compare les valeurs absolues de $\alpha_k$ et de $\beta_k$ et sélectionne celle qui est la plus petite pour former la donnée z telle que $z = \min(|\alpha_k|, |\beta_k|)$. Des moyens de division 52 de z par $\lambda d$ délivrent un quotient $z/(\lambda d)$ (connexion 53) qui est comparé à une valeur unité dans un comparateur 54 qui délivre un signal de sélection à un sélecteur 55 qui fournit le coefficient de pondération $\gamma_k$ se rapportant au signal $q_k$ tel que :

$$\gamma_k = 1 \ si \ z \geq \lambda d$$

$$\gamma_k = z/(\lambda d) \ si \ z < \lambda d$$

Le coefficient de délimitation de zones $\lambda$ constitue une donnée d'entrée prédéterminée.

Les moyens 79 (figure 9) pour numériser le signal en bande de base r(t) peuvent être réalisés de différentes manières parmi lesquelles les figures 12 et 13 donnent deux exemples possibles de réalisation. Les moyens 79 de numérisation comprennent un convertisseur analogique-numérique A/D 75 commandé par un générateur d'horloge 76 opérant à une cadence $f_s$ (figures 12 et 13). La fréquence $f_s$ devant être supérieure à la cadence-symboles 1/T de l'émission, il faut effectuer un recalage des échantillons sur cette cadence-symboles. Ceci est obtenu par des moyens d'interpolation 60 contrôlés par des moyens 61 de récupération opérant à la cadence-symboles pour la figure 13 ou à des multiples de la cadence-symboles pour la figure 12. Les moyens d'interpolation 60 sont suivis de moyens 62 de filtrage numérique sur la figure 12. La figure 13 décrit sensiblement la même situation, à la différence que le filtrage est réalisé sur le signal analogique r(t). Dans le cas où le filtre est un filtre numérique (figure 12), la cadence à laquelle le filtre opère doit être égale au moins au double de la cadence-symboles d'émission 1/T. Dans ce cas des moyens 63 de sous-échantillonnage permettent de récupérer les échantillons à la fréquence symboles.

La figure 15 représente les performances obtenues avec un récepteur selon la seconde technique dans le cas d'une modulation QPSK. L'axe des abscisses correspond au coefficient de délimitation de zones $\lambda$, l'axe des ordonnées correspond à l'amélioration exprimée par un rapport de la variance $\sigma^2_\phi(\lambda)$ sur la variance $\sigma^2_\phi(0)$ qui est la variance de l'estimateur de phase connu dans le cas où le signal intermédiaire pondéré $u'_k$ est moyenné sur une suite de N=64 valeurs. Le rapport, exprimé en décibels (dB), mesure la gigue de phase minimale. Les courbes sont paramétrées par des valeurs de rapports signal/bruit SNR exprimées en décibels (dB). Lorsque $\lambda = 0$, on obtient la situation d'un récepteur ne mettant pas en oeuvre l'invention. On observe que les courbes sont monotonement décroissantes lorsque le coefficient de délimitation de zones augmente. L'amélioration observée est d'autant plus importante que le rapport signal/bruit est faible.

**Revendications**

1. Système de transmission numérique comprenant un émetteur et un récepteur, le récepteur comportant:

   - des moyens pour convertir un signal reçu, codé d'après des états d'une constellation, en un signal en bande de base comportant deux composantes en quadrature l'une avec l'autre,
   - des moyens pour numériser le signal en bande de base,
   - des moyens de décision pour estimer un état de la constellation le plus proche du signal en bande de base numérisé,
   - des moyens de synchronisation pour estimer un écart de phase entre l'état estimé et le signal en bande de base, et pour corriger l'écart de phase en formant un signal de correction, caractérisé en ce que, les deux composantes définissant un point représentant le signal reçu dans un plan I, Q dans lequel sont également repérés les états de la constellation, les moyens de synchronisation forment le signal de correction en dépendance avec des zones du plan I, Q dans lesquelles est situé le point représentant le signal numérisé en bande de base, et sont tels que, d'une part, dans des premières zones non-jointives contenant individuellement un état de la constellation, le signal de correction est proportionnel à l'écart de phase mesuré entre le signal initial en bande de base et l'état de la constellation le plus proche, et que, d'autre part, les moyens de synchronisation sont tels que dans des secondes zones, extérieures aux premières zones, le signal de correction varie d'après ledit écart de phase pondéré par un coefficient de pondération qui dépend du signal soumis à décision appelé ici point soumis à décision, le coefficient de pondération décroissant progressivement lorsque le point soumis à décision passe d'une frontière de la première zone la plus proche dudit point jusqu'à une limite située à égale distance de couples d'états adjacents, la limite étant la limite la plus proche dudit point.

2. Système selon la revendication 1 caractérisé en ce que les moyens de synchronisation comprennent un oscillateur commandable par le signal de correction, l'oscillateur activant les moyens de conversion pour générer les composantes du signal en bande de base, les moyens de synchronisation comprenant une table de lecture qui est adressée par les composantes du signal en bande de base, la table délivrant le signal de correction adapté à chaque point du plan I, Q.

3. Système selon la revendication 1 caractérisé en ce que les moyens de synchronisation comprennent un oscillateur commandable par le signal de correction, l'oscillateur activant les moyens de conversion pour générer les composantes du signal en bande de base, les moyens de synchronisation comprenant:

   a) des moyens pour estimer l'écart de phase,
   b) des moyens de reconnaissance de zones qui délivrent des coefficients de pondération relatifs aux zones,
   c) des moyens pour pondérer, par le coefficient de pondération y afférent, l'écart de phase mesuré, et pour délivrer le signal de correction adapté à chaque point du plan I,Q.

4. Système selon la revendication 1 caractérisé en ce que les moyens de conversion comprennent un oscillateur oscillant librement sur une fréquence fixe pour former le signal en bande de base, et en ce que les moyens de synchronisation comprennent des moyens de déphasage numérique pour estimer et convertir l'écart de phase, pondéré par le coefficient de pondération, en un signal complexe de correction qui est multiplié numériquement par les composantes du signal en bande de base pour les déphaser.

5. Système selon la revendication 4 caractérisé en ce que les moyens de déphasage comprennent:

   - des moyens pour générer un signal intermédiaire complexe déterminant l'écart de phase,
   - des moyens de reconnaissance de zones qui délivrent des coefficients de pondération relatifs aux zones,
   - des moyens pour pondérer, par le coefficient de pondération y afférent, le signal intermédiaire complexe représentant l'écart de phase,
   - des moyens pour déliver le signal complexe de correction à partir du signal intermédiaire complexe pondéré représentant l'écart de phase pondéré.

6. Système selon la revendication 5 caractérisé en ce que les moyens de déphasage comprennent des moyens de calcul pour calculer des valeurs moyennes pondérées d'écart de phase adressant les moyens délivrant le signal complexe de correction.

7. Récepteur pour un système de transmission numérique, le récepteur comportant:

   - des moyens pour convertir un signal reçu, codé d'après des états d'une constellation, en un signal en bande de base comportant deux composantes en quadrature l'une avec l'autre,
   - des moyens pour numériser le signal en bande de base,
   - des moyens de décision pour estimer un état de la constellation le plus proche du signal en bande de base numérisé,
   - des moyens de synchronisation pour estimer un écart de phase entre l'état estimé et le signal en bande de base, et pour corriger l'écart de phase en formant un signal de correction, caractérisé en ce que, les deux composantes définissant un point représentant le signal reçu dans un plan I, Q dans lequel sont également repérés les états de la constellation, les moyens de synchronisation forment le signal de correction en dépendance avec des zones du plan I, Q dans lesquelles est situé le point représentant le signal numérisé en bande de base, et sont tels que, d'une part, dans des premières zones non-jointives contenant individuellement un état de la constellation, le signal de correction est proportionnel à l'écart de phase mesuré entre le signal initial en bande de base et l'état de la constellation le plus proche, et que, d'autre part, les moyens de synchronisation sont tels que, dans des secondes zones, extérieures aux premières zones, le signal de correction varie d'après ledit écart de phase pondéré par un coefficient de pondération qui dépend du signal soumis à décision appelé ici point soumis à décision, le coefficient de pondération décroissant progressivement lorsque le point soumis à décision passe d'une frontière de la première zone la plus proche du point jusqu'à une limite située à égale distance de couples d'états adjacents, la limite étant la limite la plus proche dudit point.

8. Récepteur selon la revendication 7 caractérisé en ce que les moyens de synchronisation comprennent un oscillateur commandable par le signal de correction, l'oscillateur activant les moyens de conversion pour générer les composantes du signal en bande de base, les moyens de synchronisation comprenant une table de lecture qui est adressée par les composantes du signal en bande de base, la table délivrant le signal de correction adapté à chaque point du plan I, Q.

9. Récepteur selon la revendication 7 caractérisé en ce que les moyens de synchronisation comprennent un oscillateur commandable par le signal de correction, l'oscillateur activant les moyens de conversion pour générer les composantes du signal en bande de base, les moyens de synchronisation comprenant:

a) des moyens pour estimer l'écart de phase,

b) des moyens de reconnaissance de zones qui délivrent des coefficients de pondération relatifs aux zones,

c) et des moyens pour pondérer, par le coefficient de pondération y afférent, l'écart de phase mesuré, et pour délivrer le signal de correction adapté à chaque point du plan I,Q.

10. Récepteur selon la revendication 7 caractérisé en ce que les moyens de conversion comprennent un oscillateur oscillant librement sur une fréquence fixe pour former le signal en bande de base, et en ce que les moyens de synchronisation comprennent des moyens de déphasage numérique pour estimer et convertir l'écart de phase, pondéré par le coefficient de pondération, en un signal complexe de correction qui est mélangé numériquement aux composantes du signal en bande de base pour les déphaser.

11. Récepteur selon la revendication 10 caractérisé en ce que les moyens de déphasage comprennent:

- des moyens pour générer un signal intermédiaire complexe déterminant l'écart de phase,
- des moyens de reconnaissance de zones qui délivrent des coefficients de pondération relatifs aux zones,
- des moyens pour pondérer, par le coefficient de pondération y afférent, le signal intermédiaire complexe représentant l'écart de phase,
- des moyens pour déliver le signal complexe de correction à partir du signal intermédiaire complexe pondéré représentant l'écart de phase pondéré.

12. Récepteur selon la revendication 11 caractérisé en ce que les moyens de déphasage comprennent des moyens de calcul pour calculer des valeurs moyennes pondérées d'écart de phase adressant les moyens délivrant le signal complexe de correction.

FIG.1

FIG.2

FIG.3

FIG.4

FIG.5

FIG.6

FIG.7

FIG.8

FIG.9

$$P_k = d_k e^{j\phi} + n_k$$

$$q_k = \alpha_k + j\beta_k$$

FIG.10

FIG.11

FIG.12

FIG.13

FIG.14

FIG.15

Office européen
des brevets

**RAPPORT DE RECHERCHE EUROPEENNE**

Numero de la demande

EP 95 20 1767

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A,D | EP-A-0 118 156 (T.R.T.)<br>* abrégé; figures 1-3 * | 1-12 | H04L27/38 |
| A | US-A-4 283 682 (SIFFORD & MAGILL)<br>* abrégé; figure 2 *<br>* colonne 2, ligne 4 - ligne 16 * | 1-12 | |
| A | EP-A-0 571 788 (ANT NACHRICHTENTECHNIK)<br>* abrégé; figure 3 *<br>* page 3, ligne 51 - page 4, ligne 6 * | 1-12 | |
| A | US-A-4 648 100 (MARDIROSIAN)<br>* abrégé; figures 3-7 *<br>* colonne 3, ligne 44 - colonne 4, ligne 21 * | 1-12 | |
| A | DE-C-41 00 099 (ANT NACHRICHTENTECHNIK)<br>* abrégé; figure 3 * | 1-12 | |
| A | EP-A-0 262 644 (NEC)<br>* abrégé; figures 7,11 * | 1-12 | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 25 Septembre 1995 | Scriven, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P04C02)